# EUROPÄISCHE PATENTSCHRIFT

(11) **EP 2 128 639 B1**
(45) Veröffentlichungstag und Bekanntmachung des Hinweises auf die Patenterteilung: **24.08.2016**
(21) Anmeldenummer: 09006640.8
(22) Anmeldetag: 16.05.2009
(51) Int. Cl.: G01S 19/40, G01S 19/08

(54) **VERFAHREN ZUM VERBESSERN DER KONTINUITÄT BEI EINEM ZWEIFREQUENZ-SATELLITENNAVIGATIONSSYSTEM**
METHOD FOR IMPROVING THE CONTINUITY IN A DUAL FREQUENCY SATELLITE NAVIGATION SYSTEM
PROCÉDÉ D'AMÉLIORATION DE LA CONTINUITÉ DANS UN SYSTÈME DE NAVIGATION SATELLITE À DOUBLE FRÉQUENCE

(30) Priorität: 26.05.2008 DE 102008025064
(43) Veröffentlichungstag der Anmeldung: 02.12.2009
(73) Patentinhaber: Airbus DS GmbH, 82024 Taufkirchen (DE)
(72) Erfinder: Trautenberg, Hans, L., Dr., 50823 Köln (DE)
(74) Vertreter: Frenkel, Matthias Alexander

(56) Entgegenhaltungen:
- US-A1- 2006 214 844
- S. SKONE: "Ionospheric Warning System for Marine DGPS Users" PROCEEDINGS OF ION GNSS 2006, 26. September 2006 (2006-09-26), Seiten 1992-2005, XP002560830 Fort Worth, Texas , USA
- J.R. MARTÍN ET AL.: "Galileo Orbitography and Synchronisation Processing Facility (OSPF): Preliminary Design" PROCEEDINGS OF ION GNSS 2006, 26. September 2006 (2006-09-26), Seiten 575-583, XP002560831 Fort Worth, Texas , USA

## Beschreibung

Die Erfindung betrifft ein Verfahren zum Verarbeiten von einer Alarmnachricht, die durch ein Verfahren zum Verbessern der Kontinuität bei einem Zweifrequenz-Satellitennavigationssystem erzeugt und übermittelt wurde, gemäß Anspruch 1.

Satellitensysteme zur weltweiten Navigation (Global Navigation Satellite System GNSS, kurz Satellitennavigationssystem) werden zur Positionsbestimmung und Navigation auf der Erde und in der Luft eingesetzt. GNSS Systeme, wie beispielsweise dem im operativen Betrieb befindlichen GPS (Global Positioning System) oder das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System (Raumsegment), ein mit einer zentralen Berechnungsstation verbundenes erdfestes Empfangseinrichtungs-System (Bodensegment), das mehrere Bodenstationen sowie Galileo-Sensorstationen umfasst, sowie Nutzungssysteme auf, welche die von den Satelliten per Funk übermittelten Satellitensignale insbesondere zur Navigation auswerten und nutzen. Bei GPS werden Satellitensignale für zivile Zwecke im L1-Frequenzband übertragen, d.h. auf mit der Träger-Frequenz 1575,42 MHz. Dadurch können durch den Einfluss der Ionosphäre bewirkte Laufzeitfehler die Navigationsgenauigkeit unmittelbar beeinträchtigen.

Beim im Aufbau befindlichen europäischen Satellitennavigationssystem (im Folgenden auch als Galileo-System oder kurz Galileo bezeichnet) und der geplanten Modernisierung von GPS ist daher die Nutzung von zwei Frequenzbändern für die Übertragung von zivilen Satellitensignalen geplant. Dadurch kann der Einfluss der Ionosphäre auf die Laufzeit der Satellitensignale besser kompensiert oder sogar eliminiert werden. Bei einem derartigen Zweifrequenz-Satellitennavigationssystem wird das gleiche Satellitensignal in zwei unterschiedlichen Frequenzbändern übertragen, beispielsweise im L1- und im L2-Band (1227,60 MHz). Ein das Signal empfangende Nutzungssystem, beispielsweise ein mobiles Navigationsgerät, kann die beiden Signale vergleichen und Laufzeitunterschiede kompensieren. Allerdings kann sich der Ausfall der Übertragung von Satellitensignalen in einem der beiden Frequenzbänder negativ auf die Kontinuität auswirken, da ein empfangendes Nutzungssystem nicht mehr den Einfluss der Ionosphäre auf die Navigationsgenauigkeit bestimmen kann. Dies kann insbesondere für den bei Galileo vorgesehenen sicherheitskritischen Dienst (Safety of Life (SoL) Service) von Nachteil sein, der eine kontinuierlich hohe Navigationsgenauigkeit erfordert.

Die Veröffentlichung S. SKONE: "Ionospheric Warning System for Marine DGPS Users" PROCEEDINGS OF ION GNSS 2006, 26. September 2006 (2006-09-26), Seiten 1992-2005, Fort Worth, Texas , USA, beschreibt ein Echtzeit-Warnsystem für ionosphärische Störungen für Nordamerikanische Benutzer von DGPS (Differential GPS).

Die Veröffentlichung J.R. MARTÍN ET AL.: "Galileo Orbitography and Synchronisation Processing Facility (OSPF): Preliminary Design" PROCEEDINGS OF ION GNSS 2006, 26. September 2006 (2006-09-26), Seiten 575-583, Fort Worth, Texas , USA, beschreibt das vorläufige Design der Galileo Orbitography and Synchonization Processing Facility (OSPF).

Aufgabe der vorliegenden Erfindung ist es, eine weitere Verbesserung der Kontinuität bei einem Zweifrequenz-Satellitennavigationssystem vorzuschlagen.

Diese Aufgabe wird durch ein Verfahren zum Verarbeiten von einer Alarmnachricht, die durch ein Verfahren zum Verbessern der Kontinuität bei einem Zweifrequenz-Satellitennavigationssystem erzeugt und übermittelt wurde, mit den Merkmalen von Anspruch 1 gelöst. Weitere Ausgestaltungen der Erfindung sind Gegenstand der abhängigen Ansprüche.

Ein wesentlicher Gedanke der Erfindung besteht nun darin, dass die Ionosphäre durch Zweifrequenzmessungen beobachtet wird und Veränderungen der Ionosphäre signalisiert werden. Dadurch kann ein Nutzungssystem vor insbesondere starken Veränderungen der Ionosphäre und einer daraus resultierenden möglichen Störung der Übertragung eines Satellitensignals gewarnt werden und entsprechend reagieren, wodurch die Kontinuität verbessert werden kann. Insbesondere muss der Ausfall der Übertragung von Satellitensignalen auf einer Frequenz aufgrund von starken Veränderungen der Ionosphäre nicht mehr zu einem Kontinuitätsvorfall führen, da ein Nutzungssystem bei einer signalisierten Veränderung der Ionosphäre schnell genug reagieren kann, um seine Operation noch zu Ende zu führen.

Nach der Erfindung ist ein Verfahren zum Verbessern der Kontinuität bei einem Zweifrequenz-Satellitennavigationssystem vorgesehen, das folgende Schritte aufweist:
- Beobachten der Ionosphäre durch Messungen in den zwei oder mehr Frequenzbändern, und
- Übermitteln einer Alarmnachricht, die Nutzungssysteme über eine Änderung der Ionosphäre informiert, wenn wenigstens eine Messung eine Veränderung der Ionosphäre ergibt, die von einer oder mehreren vorgegebenen Bedingungen abweicht. Dies ermöglicht eine Alarmierung eines Nutzungssystems, das seine Positionsbestimmung entsprechend an die Veränderung der Ionosphäre anpassen kann.

Das Beobachten der Ionosphäre durch Messungen in den zwei oder mehr Frequenzbändern kann von einem Bodensegment des Satellitennavigationssystems und/oder von Satelliten des Satellitennavigationssystems aus erfolgen.

Ferner kann das Übermitteln der Alarmnachricht entweder über Satelliten des Satellitennavigationssystems oder von einem Bodensegment des Satellitennavigationssystems aus erfolgen.

Die Messungen können Laufzeitmessungen von in den Frequenzbändern übertragenen Signalen umfassen. Durch eine Laufzeitmessung kann eine Veränderung der Ionosphäre relativ schnell und sicher festgestellt werden.

Das Beobachten der Ionosphäre durch Messungen in den zwei oder mehr Frequenzbändern kann das Aussenden von mindestens einem Messsignal aufweisen. Anstelle von herkömmlichen Signalen des Satellitennavigationssystems, die ebenfalls für die Beobachtung der Ionosphäre genutzt werden können, kann mit gesonderten Messsignalen eine gezielte Beobachtung der Ionosphäre vorgenommen werden.

Eine der vorgegebenen Bedingungen kann eine Mindestdauer einer Änderung der Ionosphäre sein. Erst wenn also eine Messung oder Beobachtung der Ionosphäre eine längere und keine nur flüchtige oder schnelle Veränderung ergibt, kann dadurch das Aussenden einer Alarmnachricht bewirkt werden, da die Kontinuität durch eine längere Veränderung eingeschränkt werden könnte.

Weiterhin kann eine der vorgegebenen Bedingungen ein Überschreiten einer vorgegebenen Maximallaufzeitabweichung eines Messsignals sein. Dadurch können kurze Laufzeitabweichungen eines Signals von einer erwarteten Laufzeit, die beispielsweise durch schnelle Ionosphärenänderungen bewirkt werden können, kein Aussenden einer Alarmnachricht bewirken, was zu unnötigen Reaktionen bei den Nutzungssystemen führen könnte.

Die Alarmnachricht kann eine oder mehrere der folgenden Informationen aufweisen: Region, für welche die Ionosphäre gestört ist; Ort und Ausdehnung einer ionosphärischen Störung in einer Schicht in einer bestimmten Höhe; ein Polygon, welches das Gebiet einer ionosphärischen Störung in einer Schicht in einer bestimmten Höhe angibt; bloße Angabe des Vorliegens einer Störung; Angabe über eine Verzögerung oder eine Reduktion einer Verzögerung maximal in einem Zeitintervall, für welches Kontinuität sichergestellt werden soll.

In einem Zweifrequenz-Satellitennavigationssystem, das ein Raumsegment mit mehreren Satelliten, die Satellitensignale, die Navigationsnachrichten enthalten, zum Empfangen und Auswerten durch Nutzungssysteme für die Positionsbestimmung und Navigation über zwei Frequenzen aussenden, und ein Bodensegment mit mehreren Beobachtungs- und Kommandostationen, welche die Satelliten überwachen, umfasst, können eine oder mehrere der Beobachtungs- und Kommandostationen und/oder der Satelliten ausgebildet sein, ein Verfahren zum Verbessern der Kontinuität und wie vorstehend beschrieben auszuführen, um die Kontinuität im Zweifrequenz-Satellitennavigationssystem zu optimieren.

Eine Ausführungsform der Erfindung betrifft nun ein Verfahren zum Verarbeiten von einer Alarmnachricht mit den folgenden Schritten; Empfangen der Alarmnachricht, die mit einem Verfahren zum Verbessern der Kontinuität und wie vorstehend beschrieben übermittelt wurde,
Ermitteln der in der Alarmnachricht enthaltenen Information über eine Veränderung der Ionosphäre, und
Berechnen der Beeinflussung einer Positionsbestimmung durch die Veränderung der Ionosphäre. Dieses Verfahren kann beispielsweise in Form eines Algorithmus in einem Empfänger für Satellitensignale implementiert sein. Das Verfahren ist ferner dadurch gekennzeichnet, dass es von einem Empfänger für Satellitensignale eines Zweifrequenz-Satellitennavigationssystems ausgeführt wird, wobei der Empfänger zunächst zwei Messsignale auf zwei unterschiedlichen Frequenzen empfängt und dann eines der Messsignale verliert, so dass nur noch eines von den zwei Messsignalen zur Verfügung steht, und der Empfänger zur Positionsbestimmung eine zuletzt ermittelte ionosphärischen Laufzeitverzögerung des Messsignals verwendet, das nicht mehr zur Verfügung steht, wobei das Verfahren ferner folgenden Schritt aufweist: Entscheiden, ob die zuletzt ermittelte ionosphärische Laufzeitverzögerung des Messsignals für eine Kompensation des Einflusses der mittels der Alarmnachricht empfangenen Veränderung der Ionosphäre verwendet werden kann. Dies ermöglicht es einem Empfänger, der nur noch ein Messsignal auf einer Frequenz empfängt, da beispielsweise die zweite zur Übertragung von Satellitensignalen vorgesehene Frequenz gestört ist, beim Eintreffen einer Alarmnachricht zu entschieden, ob die mit der Alarmnachricht signalisierte ionosphärische Störung mittels der zuletzt ermittelten Laufzeitverzögerung noch kompensiert werden kann, oder ob sie so groß ist, dass eine Kompensation mit der zuletzt ermittelten Laufzeitverzögerung nicht mehr sinnvoll ist, um die benötigte Kontinuität aufrecht zu erhalten.

Das Verfahren zum Verarbeiten von einer Alarmnachricht kann gemäß einer Ausführungsform der Erfindung ferner durch den folgenden Schritt gekennzeichnet sein:
Ausschließen der Satelliten, die aufgrund der berechneten Beeinflussung der Positionsbestimmung durch die Veränderung der Ionosphäre zu lange Signallaufzeiten aufweisen, von der Positionsbestimmung.

Schließlich sieht die Erfindung noch in einer Ausführungsform einen Empfänger für Signale eines Satellitennavigationssystems vor, die Alarmnachrichten enthalten, wobei der Empfänger zum Ausführen eines Verfahrens zum Verarbeiten von einer Alarmnachricht nach der Erfindung und wie vorstehend beschrieben ausgebildet ist. Beispielsweise kann das Verfahren in der Betriebssoftware eines Empfängers für Navigationsnachrichten, beispielsweise eines mobilen Navigationsgerätes, implementiert sein. Dadurch kann die Funktionalität des Empfängers erweitert werden, indem der Empfänger bei einer mittels einer Alarmnachricht signalisierten Veränderung der Ionosphäre Maßnahmen einleitet, um die Genauigkeit der Positionsbestimmung aufrecht zu erhalten.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
Fig. 1 ein Satellitennavigationssystem mit einem Ausführungsbeispiel einer Vorrichtung zum Verbessern der Kontinuität bei einem Zweifrequenz-Satellitennavigationssystem gemäß der Erfindung; und
Fig. 2 ein Flussdiagramm eines Ausführungsbeispiels eines Verfahrens zum Verbessern der Kontinuität bei einem Zweifrequenz-Satellitennavigationssystem gemäß der Erfindung.

Im Folgenden können gleiche und/oder funktional gleiche Elemente mit den gleichen Bezugszeichen versehen sein.

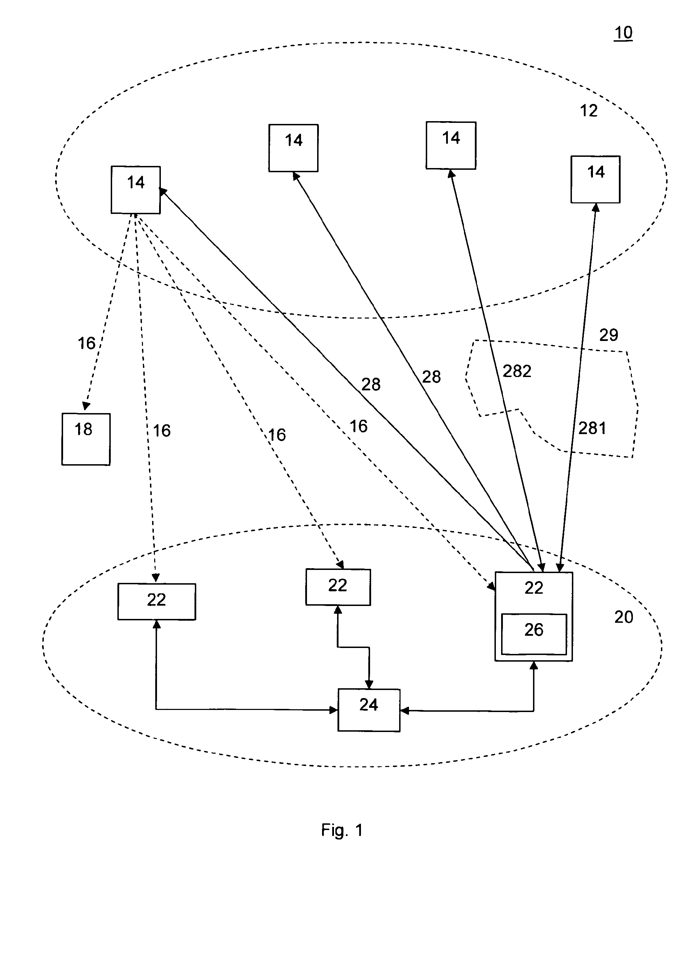

In Fig. 1 ist ein Zweifrequenz-Satellitennavigationssystem 10 mit einem Raumsegment 12 und einem Bodensegment 20 dargestellt. Das Raumsegment 12 umfasst mehrere Satelliten 14, die auf ihrem jeweiligen Orbit um das Bodensegment 20 kreisen. Jeder Satellit sendet Satellitensignale 16 auf zwei Frequenzen bzw. in zwei Frequenzbändern wie dem L1- und L2-Band aus, die von Nutzungssystemen 18 wie beispielsweise mobilen Navigationsgeräten sowie von Beobachtungs- und Kommandostationen 22 des Bodensegments 20 empfangen werden können. Die Satellitensignale 16 enthalten Navigationsnachrichten des Satellitennavigationssystems 10, die Orbitalparameter zur Orbitbeschreibung enthalten. Die Beobachtungs- und Kommandostationen 22, die bei Galileo als getrennte Einheiten ausgelegt sind, sind insbesondere zur Überwachung und Steuerung der Satelliten 14 vorgesehen. Hierzu leiten sie empfangene Navigationssignale 16 über ein Kommunikationsnetzwerk an ein Kontrollzentrum 24 (zentrale Prozessierungsstelle des Bodensegments 20) weiter, das die empfangenen Navigationssignale 16 auswertet, indem es die mit jedem Navigationssignal 16 übertragenen Daten eines Satelliten 14, insbesondere Orbit und Zeitpunkt der Signalerzeugung sowie Signalstruktur und Integrität der empfangenen Signale überprüft.

Insbesondere für kritische Dienste wie dem eingangs erwähnte SoL-Service bei Galileo ist ein kontinuierlicher Datenstrom von den Satelliten 14 zu den Nutzungssystemen 18 von Bedeutung, da er gewährleistet, dass die Nutzungssysteme 18, die den SoL-Service nutzen, möglichst genau ihre Position bestimmen können. Ein Beispiel für einen SoL-Service ist die Satelliten-gestützte Navigation beim Landeanflug eines Flugzeugs. Die Kontinuität des Datenstroms kann durch Veränderungen in der Ionosphäre auch bei einem Zweifrequenz-Satellitennavigationssystem beeinträchtigt werden, da ein Nutzungssystem insbesondere bei einer durch eine ionosphärischen Störung beeinträchtigten Übertragung von Satellitensignalen in einem Frequenzband nicht mehr Einflüsse der Ionosphäre auf die Laufzeit der Satellitensignale kompensieren kann, was für eine genaue Positionsbestimmung von wesentlicher Bedeutung sein kann. Ein Gebiet mit einer ionosphärischen Störung ist in Fig. 1 mit dem Bezugszeichen 29 bezeichnet.

Um die Ionosphäre und deren Einfluss auf die Ausbreitung von Satellitensignalen 16 beobachten zu können, weist eine Beobachtungs- und Kommandostation 22 Messmittel 26 auf, die ausgebildet sind, Messsignale 281 und 282 zu erzeugen und zu den Satelliten 14 zu übermitteln und den Einfluss der Ionosphäre auf die Messsignale 281 und 282 zu ermitteln. Die Messsignale 281 und 292 können spezielle Signale sein oder in ein herkömmliches Signal der Beobachtungs- und Kommandostation 22 integriert sein. Die Messsignale 281 und 282 werden von der Beobachtungs- und Kommandostation 22 zu unterschiedlichen Satelliten 14 übermittelt. Die Satelliten 14 senden die empfangenen Messsignale 281 und 282 nach Empfang zurück an die sendende Beobachtungs- und Kommandostation 22, so dass diese beispielsweise Laufzeitmessungen der Signale 281 und 282 zu den einzelnen unterschiedlichen Satelliten 14 feststellen kann. Die Satelliten 14 können in die zurückgesendeten Messsignale 281 und 282 eigene Messdaten einbetten, die dann von den Messmitteln 26 der Beobachtungs- und Kommandostation 22 ausgewertet werden können. Sofern eine Messung ergibt, dass eine ionosphärische Störung 29 vorliegt, wird eine Alarmnachricht 28 an die Satelliten 14 mit Informationen zur Störung übermittelt, die von den Satelliten 14 mittels Satellitensignal 16 weiter an die Nutzungssysteme 18 signalisiert wird. Alternativ oder auch zusätzlich können die Satelliten 14 auch anhand der empfangenen Messsignale 281 und 282 selbst feststellen, ob eine ionosphärische Störung 29 vorliegt und diese direkt per Alarmnachricht über ein Satellitensignal 16 an die Nutzungssysteme 18 und das Bodensegment 20 signalisieren. Letzteres ist insbesondere vorteilhaft, um eine schnelle Signalisierung einer ionosphärischen Störung an die Nutzungssysteme 18 zu bewerkstelligen. Die signalisierten ionosphärischen Störungen umfassen insbesondere solche Veränderungen der Ionosphäre, die zu einer Beeinträchtigung eines Satellitensignals 16 in einem Frequenzband führen können.

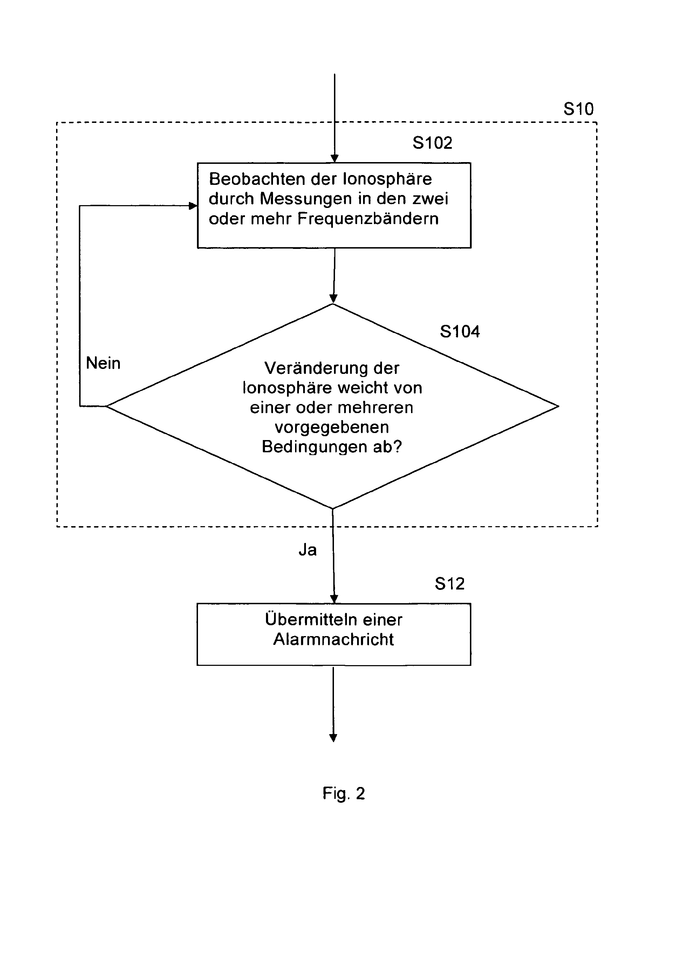

Fig. 2 zeigt einen grob skizzierten Verfahrensablauf des Beobachtungs- und Alarmierungsvorgangs, wie er beispielsweise in Form eines Algorithmus in den Messmitteln 26 einer Beobachtungs- und Kommandostation 22 implementiert sein kann. Im Schritt S10 erfolgt die Beobachtung der Ionosphäre, d.h. der eigentliche Messvorgang. Dieser Schritt ist in zwei Schritte S102 und 104 unterteilt: im Schritt S102 wird die Ionosphäre durch Messsignale beobachtet, die in den zwei vom Satellitennavigationssystem genutzten Frequenzen bzw. Frequenzbändern übermittel werden, entweder ausgesendet von einer Beobachtungs- und Kommandostation 22 oder auch direkt von Satelliten. Anschließend wird im Schritt S104 ein empfangenes Messsignal ausgewertet, indem durch das Messsignal signalisierte Veränderungen der Ionophäre dahingehend ausgewertet werden, dass festgestellt wird, ob die Veränderung von einer oder mehreren Bedingungen abweichen. Ein Beispiel für eine solche Bedingung ist eine Signallaufzeitmessung. Wird festgestellt, dass die Signallaufzeit einer Messsignals einen vorgegebenen Maximalwert überschreitet, kann von einer wesentlichen ionosphärischen Störung ausgegangen werden. Anhand der genauen gemessenen Signallaufzeit kann dann die Art und insbesondere Stärke der ionosphärischen Störung weiter eingegrenzt werden. Wird im Schritt S104 festgestellt, dass die gemessenen Veränderungen der Ionosphäre von einer oder von mehreren der Bedingungen abweicht, wird mit Schritt S12 fortgefahren. Andernfalls wird erneut mit Schritt S102 eine Messung durchgeführt. Im Schritt S12 wird schließlich eine Alarmnachricht an die Satelliten 14 bzw. von den Satelliten 14 an die Nutzungssysteme 18 übermittelt. Die Alarmnachricht kann im Übrigen nicht gesendet werden, wenn nur eine schnelle Veränderung der Ionosphäre beobachtet wurde, welche die Kontinuität nicht wesentlich beeinträchtigt.

Eine Alarmnachricht kann folgende Informationen über die beobachtete Veränderung der Ionosphäre enthalten:
1. Die Ionosphäre wird für eine ganze (im ICD fest vordefinierte) Region als gestört alarmiert.
2. Es werden der Ort (in magnetischen Koordinaten) und die Ausdehnung (als Radius) der ionosphärischen Störung in einer Schicht in einer bestimmten Höhe (zum Beispiel 300 km) in der Alarmnachricht übertragen.
3. Es werden der Ort (in magnetischen Koordinaten) und die Ausdehnung (als Beschreibung einer Ellipse) der ionosphärischen Störung in einer Schicht in einer bestimmten Höhe (zum Beispiel 300 km) in der Alarmnachricht übertragen.
4. Es wird ein Polygon, welches das Gebiet (in magnetischen Koordinaten) der ionosphärischen Störung in einer Schicht in einer bestimmten Höhe (zum Beispiel 300 km) beschreibt, in der Alarmnachricht übertragen.

Die Alarmnachricht kann zudem noch beinhalten, dass nur angegeben wird, dass eine Störung vorliegt; es kann aber auch angegeben werden, wie groß die Verzögerung oder die Reduktion der Verzögerung maximal in dem Zeitintervall war, für welches die Kontinuität festgestellt werden sollte.

Im Folgenden wird noch kurz die Verarbeitung einer Alarmnachricht in einem Nutzungssystem beispielhaft skizziert: nach Empfang einer Alarmnachricht kann ein Nutzungssystem berechnen, wie stark die mit der Alarmnachricht signalisierte Veränderung der Ionosphäre seine Positionslösung bzw. Positionsbestimmung beeinflusst. Weiterhin kann es die Satelliten, zu welchen die Laufzeit durch die Ionosphäre durch eine Extrapolation von vorhergehenden Zweifrequenzmessungen durch das Nutzungssystem nicht mehr ausreichen genau ist, aus der Positionslösung bzw. Positionsbestimmung ausschließen.

Durch die Erfindung kann die Kontinuität bei einem Zweifrequenz-Satellitennavigationssystem wesentlich verbessert werden. Es steht zum einen die Reduzierung von Fehlern durch die Zweifrequenz-Messung bzw. -Übertragung von Satellitensignalen zur Verfügung, die in der Regel besser als die Ionosphärenmodelle von WAAS (Wide Area Augmentation System) und EGNOS (European Geostationary Navigation Overlay Service) ist. Zum anderen kann ein Zweifrequenz-Satellitennavigationssystem für die Zwecke der Erfindung mit nur geringfügig angehobenen Fehlern betrieben werden, sollte eine Frequenz bzw. ein Frequenzband aufgrund ionosphärischer Störungen ausfallen, da ein Nutzungssystem vor starken Veränderungen der Ionosphäre, die zu großen Fehlern führen kann, gewarnt wird. Dadurch führt der Ausfall einer Frequenz nicht mehr unbedingt zu einem Kontinuitätsvorfall, da ein Nutzungssystem bei Ausfall einer Frequenz für gewöhnlich seine Operation noch zu Ende führen kann, bevor eine Ionosphären-Alarmnachricht kommt.

### Bezugszeichen

- 10: Satellitennavigationssystem
- 12: Raumsegment
- 14: Satelliten
- 16: Satellitensignale
- 18: Nutzungssysteme
- 20: Bodensegment
- 22: Beobachtungs- und Kommandostationen
- 24: Kontrollzentrum
- 26: Messmittel zum Erzeugen und Beobachten der Messsignale 281 und 282
- 28: Alarmnachricht einer Beobachtungs- und Kommandostation 22
- 281,282: Messsignal einer Beobachtungs- und Kommandostation 22
- 29: Gebiet mit einer ionosphärischer Störung
- S10-S12: Verfahrensschritte

## Patentansprüche

1. Verfahren zum Verarbeiten von einer Alarmnachricht, die durch ein Verfahren zum Verbessern der Kontinuität bei einem Zweifrequenz-Satellitennavigationssystem erzeugt und übermittelt wurde, wobei das Verfahren zum Verbessern der Kontinuität bei dem Zweifrequenz-Satellitennavigationssystem folgende Schritte aufweist:
- Beobachten der Ionosphäre durch Messungen in den zwei oder mehr Frequenzbändern (S10), und
- Übermitteln der Alarmnachricht, die Nutzungssysteme über eine Änderung der Ionosphäre informiert, wenn wenigstens eine Messung eine Veränderung der Ionosphäre ergibt, die von einer oder mehreren vorgegebenen Bedingungen abweicht (S12), wobei das Verfahren zum Verarbeiten der Alarmnachricht folgende Schritte aufweist:
- Empfangen der Alarmnachricht, die mit dem Verfahren zum Verbessern der Kontinuität bei dem Zweifrequenz-Satellitennavigationssystem übermittelt wurde,
- Ermitteln der in der Alarmnachricht enthaltenen Information über eine Veränderung der Ionosphäre, und
- Berechnen der Beeinflussung einer Positionsbestimmung durch die Veränderung der Ionosphäre, **dadurch gekennzeichnet, dass**
das Verfahren zum Verarbeiten der Alarmnachricht von einem Empfänger für Satellitensignale eines Zweifrequenz-Satellitennavigationssystems ausgeführt wird,
wobei der Empfänger zunächst zwei Messsignale auf zwei unterschiedlichen Frequenzen empfängt und dann eines der Messsignale verliert, so dass nur noch eines von den zwei Messsignalen zur Verfügung steht, und der Empfänger zur Positionsbestimmung die zuletzt aus der Zweifrequenzmessung ermittelte ionosphärische Laufzeitverzögerung des Messsignals verwendet,
wobei das Verfahren zum Verarbeiten der Alarmnachricht ferner den folgenden Schritt aufweist:
Entscheiden, ob die zuletzt ermittelte ionosphärische Laufzeitverzögerung des Messsignals für eine Kompensation des Einflusses der Ionosphäre mittels der in Alarmnachricht empfangenen Veränderung der Ionosphäre verwendet werden kann.

2. Verfahren nach Anspruch 1,
**dadurch gekennzeichnet, dass**
bei dem Verfahren zum Verbessern der Kontinuität bei dem Zweifrequenz-Satellitennavigationssystem das Beobachten der Ionosphäre durch Messungen in den zwei oder mehr Frequenzbändern von einem Bodensegment des Satellitennavigationssystems und/oder von Satelliten des Satellitennavigationssystems aus erfolgt.

3. Verfahren nach Anspruch 1 oder 2,
**dadurch gekennzeichnet, dass**
bei dem Verfahren zum Verbessern der Kontinuität bei dem Zweifrequenz-Satellitennavigationssystem das Übermitteln der Alarmnachricht entweder über Satelliten des Satellitennavigationssystems oder von einem Bodensegment des Satellitennavigationssystems aus erfolgt.

4. Verfahren nach einem der Ansprüche 1 bis 3,
**dadurch gekennzeichnet, dass**
bei dem Verfahren zum Verbessern der Kontinuität bei dem Zweifrequenz-Satellitennavigationssystem die Messungen Laufzeitmessungen von in den Frequenzbändern übertragenen Signalen umfasst.

5. Verfahren nach einem der vorhergehenden Ansprüche,
**dadurch gekennzeichnet, dass**
bei dem Verfahren zum Verbessern der Kontinuität bei dem Zweifrequenz-Satellitennavigationssystem das Beobachten der Ionosphäre durch Messungen in den zwei oder mehr Frequenzbändern das Aussenden von mindestens einem Messsignal aufweist.

6. Verfahren nach einem der vorhergehenden Ansprüche,
**dadurch gekennzeichnet, dass**
bei dem Verfahren zum Verbessern der Kontinuität bei dem Zweifrequenz-Satellitennavigationssystem eine der vorgegebenen Bedingungen eine Mindestdauer einer Änderung der Ionosphäre ist.

7. Verfahren nach einem der vorhergehenden Ansprüche,
**dadurch gekennzeichnet, dass**
bei dem Verfahren zum Verbessern der Kontinuität bei dem Zweifrequenz-Satellitennavigationssystem eine der vorgegebenen Bedingungen ein Überschreiten einer vorgegebenen Maximallaufzeitabweichung eines Messsignals ist.

8. Verfahren nach einem der vorhergehenden Ansprüche,
**dadurch gekennzeichnet, dass**
die Alarmnachricht eine oder mehrere der folgenden Informationen aufweist: Region, für welche die Ionosphäre gestört ist; Ort und Ausdehnung einer ionosphärischen Störung in einer Schicht in einer bestimmten Höhe; ein Polygon, welches das Gebiet einer ionosphärischen Störung in einer Schicht in einer bestimmten Höhe angibt; bloße Angabe des Vorliegens einer Störung; Angabe über eine Verzögerung oder eine Reduktion einer Verzögerung maximal in einem Zeitintervall, für welches Kontinuität sichergestellt werden soll.

9. Verfahren nach einem der vorhergehenden Ansprüche,
wobei das Verfahren zum Verarbeiten der Alarmnachricht ferner durch den folgenden Schritt gekennzeichnet ist:
Ausschließen der Satelliten, die aufgrund der berechneten Beeinflussung der Positionsbestimmung durch die Veränderung der Ionosphäre zu lange Signallaufzeiten aufweisen, von der Positionsbestimmung.

10. Empfänger (18) für Signale (16) eines Satellitennavigationssystems (10), die Alarmnachrichten (28) enthalten, wobei der Empfänger zum Ausführen eines Verfahrens nach einem der vorhergehenden Ansprüche ausgebildet ist.

## Claims

1. A method for processing an alert message generated and transmitted by a method for improving the continuity in a dual frequency satellite navigation system, wherein the method for improving the continuity in the dual frequency satellite navigation system comprises following steps:
- observing the ionosphere by measurements in the two or more frequency bands (S10), and
- transmitting the alert message informing utilization systems about a change of the ionosphere, when at least one measurement results in a change of the ionosphere deviating from one or more predetermined conditions (S12), wherein the method for processing the alert message comprises following steps:
- receiving the alert message transmitted with the method for improving the continuity in the dual frequency satellite navigation system,
- determining the information included in the alert message about a change of the ionosphere, and
- calculating the influence on a position determination due to the change of the ionosphere,
**characterized in that**
the method for processing the alert message is performed by a receiver for satellite signals of a dual frequency satellite navigation system, wherein first the receiver receives two measurement signals on two different frequencies and then the receiver loses one of the measurement signals such that only one of the two measurement signals is available, and the receiver uses the ionospheric propagation delay of the measurement signal last determined from the two frequency measurement,
wherein the method for processing the alert message further comprises the following step:
deciding whether the last determined ionospheric propagation delay of the measurement signal can be used for a compensation of the influence on the
ionosphere due to the change of the ionosphere received in the alert message.

2. The method according to claim 1,
**characterized in that**,
in the method for improving the continuity in the dual frequency satellite navigation system, observing the ionosphere is performed by measurements in the two or more frequency bands from a ground segment of the satellite navigation system and/or from satellites of the satellite navigation system.

3. The method according to any one of claims 1 or 2,
**characterized in that**,
in the method for improving the continuity in the dual frequency satellite navigation system, transmitting the alert message is performed either via satellites of the satellite navigation system or by a ground segment of the satellite navigation system.

4. The method according to any one of claims 1 to 3,
**characterized in that**,
in the method for improving the continuity in the dual frequency satellite navigation system, the measurements comprise propagation time measurements of signals transmitted in the frequency bands.

5. The method according to any one of the preceding claims,
**characterized in that**,
in the method for improving the continuity in the dual frequency satellite navigation system, observing the ionosphere by measurements in the two or more frequency bands comprises sending at least one measurement signal.

6. The method according to any one of the foregoing claims,
**characterized in that**,
in the method for improving the continuity in the dual frequency satellite navigation system, one of the predetermined conditions is a minimum duration of a change of the ionosphere.

7. The method according to any one of the preceding claims,
**characterized in that**,
in the method for improving the continuity in the dual frequency satellite navigation system, one of the predetermined conditions is exceeding a predetermined maximum propagation time deviation of a measurement signal.

8. The method according to any one of the preceding claims,
**characterized in that**
the alert message comprises one or more of the following information: region with respect to which there is a disturbance of the ionosphere; location and extent of a ionospheric disturbance in a layer at a certain altitude; a polygon which indicates the region of a ionospheric disturbance in a layer in a determined altitude; mere indication of the presence of a disturbance; indication of a delay or a reduction of a delay maximal in a time interval for which continuity is to be ensured.

9. The method according to any one of the preceding claims, wherein the method for processing the alert message is further **characterized in** the following step:
excluding those satellites from the position determination, which, as a result of the computed influence of the change of the ionosphere on the position determination, have signal propagation times that are too long.

10. The receiver (18) for signals (16) of a satellite navigation system (10), which signals include the alert messages (28), wherein the receiver is adapted to perform the method according to any one of the preceding claims.

## Revendications

1. Procédé destiné au traitement d'un message d'alerte qui a été produit et transmis par un procédé d'amélioration de la continuité dans un système bi-fréquence de navigation par satellites, le procédé d'amélioration de la continuité dans un système bi-fréquence de navigation par satellites présentant les étapes suivantes :
- l'observation de l'ionosphère à travers des mesures réalisées dans les deux bandes de fréquence (S10) ou plus utilisées par le système, et
- la transmission du message d'alerte qui informe les systèmes d'exploitation d'une modification de l'ionosphère lorsqu'au moins une mesure fait apparaître une modification de l'ionosphère qui s'écarte d'une ou de plusieurs conditions prédéterminées (S12), le procédé destiné au traitement du message d'alerte présentant les étapes suivantes :
- la réception du message d'alerte transmis par le procédé d'amélioration de la continuité dans un système bi-fréquence de navigation par satellites,
- l'identification dans le message d'alerte de l'information concernant une modification de l'ionosphère, et
- le calcul de l'influence exercée par une modification de l'ionosphère sur la détermination d'une position,
**caractérisé en ce que**
le procédé destiné au traitement d'un message d'alerte est exécuté par un récepteur pour signaux de satellite d'un système bi-fréquence de navigation par satellites,
le récepteur recevant tout d'abord deux signaux de mesure sur deux fréquences différentes et perdant ensuite un des signaux de mesure si bien qu'il n'en reste plus qu'un seul à disposition, et le récepteur destiné à la détermination de la position utilisant le retard de propagation ionosphérique du signal de mesure dernièrement calculé à partir de la mesure réalisée en bi-fréquence,
le procédé destiné au traitement d'un message d'alerte présentant en outre l'étape suivante :
déterminer si le retard de propagation ionosphérique du signal de mesure dernièrement calculé à partir de la mesure réalisée en bi-fréquence peut être utilisé pour une compensation de l'influence de l'ionosphère à l'aide de la modification ionosphérique reçue dans le message d'alerte.

2. Procédé selon la revendication 1,
**caractérisé en ce que**
dans le cadre du procédé d'amélioration de la continuité dans un système bi-fréquence de navigation par satellites, l'observation de l'ionosphère s'effectue à travers des mesures réalisées dans les deux bandes de fréquence ou plus utilisées par le système depuis un segment sol du système de navigation par satellites et/ou depuis des satellites du système de navigation par satellites.

3. Procédé selon la revendication 1 ou 2,
**caractérisé en ce que**
dans le cadre du procédé d'amélioration de la continuité dans un système bi-fréquence de navigation par satellites, la transmission du message d'alerte s'effectue soit par le biais des satellites du système de navigation par satellites soit depuis un segment sol du système de navigation par satellites.

4. Procédé selon l'une des revendications 1 à 3,
**caractérisé en ce que**
dans le cadre du procédé d'amélioration de la continuité dans un système bi-fréquence de navigation par satellites, les mesures comprennent des mesures du temps de propagation des signaux transmis dans les bandes de fréquence utilisées par le système.

5. Procédé selon l'une des revendications précédentes,
**caractérisé en ce que**
dans le cadre du procédé d'amélioration de la continuité dans un système bi-fréquence de navigation par satellites, l'observation de l'ionosphère à travers des mesures réalisées dans les deux bandes de fréquence ou plus utilisées par le système implique l'émission d'au moins un signal de mesure.

6. Procédé selon l'une des revendications précédentes,
**caractérisé en ce que**
dans le cadre du procédé d'amélioration de la continuité dans un système bi-fréquence de navigation par satellites, l'une des conditions prédéterminées consiste en une modification ionosphérique d'une durée minimum.

7. Procédé selon l'une des revendications précédentes,
**caractérisé en ce que**
dans le cadre du procédé d'amélioration de la continuité dans un système bi-fréquence de navigation par satellites, l'une des conditions prédéterminées consiste en le dépassement d'un écart maximal prédéfini du temps de propagation d'un signal de mesure.

8. Procédé selon l'une des revendications précédentes,
**caractérisé en ce que**
le message d'alerte présente une ou plusieurs des informations suivantes : la région dans laquelle l'ionosphère est perturbée, le lieu et l'étendue de la perturbation ionosphérique dans une couche et à une altitude données, un polygone indiquant la région d'une perturbation ionosphérique dans une couche et à une altitude données, le simple fait de l'existence d'une perturbation, l'indication d'un retard ou d'une diminution de retard au maximum dans un intervalle de temps pendant lequel la continuité doit être assurée.

9. Procédé selon l'une des revendications précédentes,
le procédé destiné au traitement d'un message d'alerte étant **caractérisé en outre par** l'étape suivante :
exclure du processus de détermination de position les satellites qui présentent des temps de propagation de signal trop longs en raison de l'influence calculée de la modification ionosphérique sur la détermination de la position.

10. Récepteur (18) pour signaux (16) d'un système de navigation par satellites (10) qui contiennent des messages d'alerte (28), le récepteur étant conçu pour exécuter un procédé selon l'une des revendications précédentes.
